# EUROPEAN PATENT SPECIFICATION

(11) **EP 0 527 511 B1**
(45) Date of publication and mention of the grant of the patent: **17.03.1999**
(21) Application number: 92202131.6
(22) Date of filing: 13.07.1992
(51) Int. Cl.: A01D 57/26, A01D 57/30, A01D 34/66

(54) **An implement for mowing standing crop**
Gerät zum Mähen von stehendem Getreide
Dispositif de fauchage de récoltes sur pied

(30) Priority: 15.07.1991 NL 9101240
(43) Date of publication of application: 17.02.1993
(73) Proprietor: C. van der Lely N.V., 3155 PD Maasland (NL)
(72) Inventor: Bom, Cornelis Johannes Gerardus, NL-3181 VC Rozenburg (NL); Koorn, Maarten, NL-3123 CP Schiedam (NL)
(74) Representative: Corten, Maurice Jean F.M.

(56) References cited:
- EP-A- 0 089 257
- EP-A- 0 206 387
- EP-A- 0 218 307
- DE-A- 1 482 951
- FR-A- 2 127 703
- FR-A- 2 297 552
- FR-A- 2 618 044
- GB-A- 1 046 010

## Description

The invention relates to an implement for mowing standing crop, comprising a cutter bar having rotatable, carrier beam-supported mowing members, said implement being provided with a swath divider disposed remote from the two cutter bar ends, the arrangement being such that in operation the crop cut by the mowing members is divided across the cutter bar width into two spaced-apart swaths.

Mowing implements of the above-defined type are known from the European Patent Application 0 089 257. In this patent a mowing machine combined with a conditioner is described, wherein behind the conditioner at a distance from the side of the machine two swath guide members are arranged. With the aid of these swath guide members the crop which is conditioned by the conditioner is split into two swaths.

Another example of these known machines is described in the French patent 72.05923 (2.127.703). In this machine behind a mowing machine itself a swath guide member is arranged, which splits the crop cut by the machine in two swaths. The crop mown by the mowing members can be divided into two spaced-apart swaths in such a manner that the wheels of the tractor carrying the mowing implement or the wheels of the vehicles intended for further processing of the crop after mowing, do not pass over the mown crop. A mower having a cutter bar comprising a number of housings carrying a mowing member and comprising intermediate sections is known from the European Patent Application 0 218 307.

According to the invention the cutter bar is provided with a number of housings to which at least one mowing member is rotatably connected, a supporting member being attached to individual ones of said housings, to which supporting member the swath divider can be connected, whereby the position of the swath divider can be chosen to be at different distances from the outer end of the carrier beam. The advantage of the construction according to the invention is that, since the supporting members of the swath divider are fixed to a housing to which a mowing member is rotatably connected, they can simply be placed in the right position for splitting the crop.

More in particular, the machine in accordance with the invention will be useful when the mowing machine is to mow thick and/or long crop. In accordance with a further embodiment of the implement according to the invention, the swath divider is positioned at least partly relative to the normal direction of operative travel behind a mowing member which is provided with a crop guide member. More specifically in the case of long crop, which e.g. because of climatological circumstances may be tangled, the crop guide member located near the swath divider will promote the formation of an individual swath by the swath divider. This more in particular prevents the crop from accumulating in front of the swath divider.

An advantageous embodiment is obtained when there is arranged a crop guide member on the mowing member which is located aside the one having behind it the swath divider, and which is located at the latter mowing member side facing away from the one to which, during normal operation, the swath divider moves the crop sideways. This causes two crop guide members rotating in mutually opposite directions to act in unison in such a manner that an adequate crop separation is obtained. This will more in particular ensure that long, tangled crop can be separated properly after mowing.

A simple embodiment is obtained when the crop guide member is in the shape of a hat.

In accordance with a further embodiment, the crop guide member is disposed detachably on the upper side of the mowing member. Thus, one or more crop guide members can be used optionally or not.

To ensure an optimum mode of operation, it may be advantageous in certain circumstances for the swath divider to extend perpendicularly to the normal direction of operative travel of the mowing implement through a distance located on either side of a plane extending in the direction of operative travel and comprising the rotational axis of the mowing member, behind which the swath divider is arranged. The rotational direction of the relevant mowing member can thus introduce an adequate separation by the swath divider. In this situation, the rotational direction of the relevant mowing member will be chosen such that its leading side moves towards the side which corresponds to that to which the swath divider laterally moves the crop for the purpose of forming individual swaths.

In accordance with a further advantageous embodiment, the supporting member is provided with a wearing shoe fitted under the supporting block. This has in a simple manner an advantageous effect on the connection of the swath divider to the carrier beam.

A supporting member may be disposed at least partly between a carrier housing and an intermediate section. This simplifies the connection of the supporting members and provides that they are adequately anchored to the carrier beam.

Depending on the circumstances, e.g. the types of crop to be mown, the swath divider may consist of a swath board or a member which is rotatable about a rotary shaft. Preferably, if the mower includes a swath member at one end of the cutter bar, the swath divider is located at such a distance from this swath member that the swath formed between the swath divider and the swath member is located between the wheels of the frame carrying the mowing implement, e.g. the wheels of a tractor to which the implement is coupled.

For a better understanding of the invention and to show how the same may be carried into effect, reference will now be made, by way of example, to the accompanying drawings, in which:
Figure 1 is a plan view of a mowing implement in accordance to the invention;
Figure 2 is a rear view of the mowing implement of Figure 1, taken in the direction of the arrow II in Figure 1;
Figure 3 shows, to an enlarged scale, a portion of the mowing implement of Figure 1, taken on the line III-III in Figure 1;
Figure 4 is a plan view of the mowing implement portion of Figure 3, taken in the direction of the arrow IV in Figure 3, the mowing member shown therein having been omitted here;
Figure 5 is a further embodiment of the swath divider-to-cutter bar connection of the mowing machine in accordance with Figures 1 and 2;
Figure 6 shows a still further embodiment of the swath divider-to-cutter bar connection of the mowing machine of Figure 1;
Figure 7 is a plan view of a further implementation of a swath divider and
Figure 8 is a plan view of a still further implementation of a swath divider.

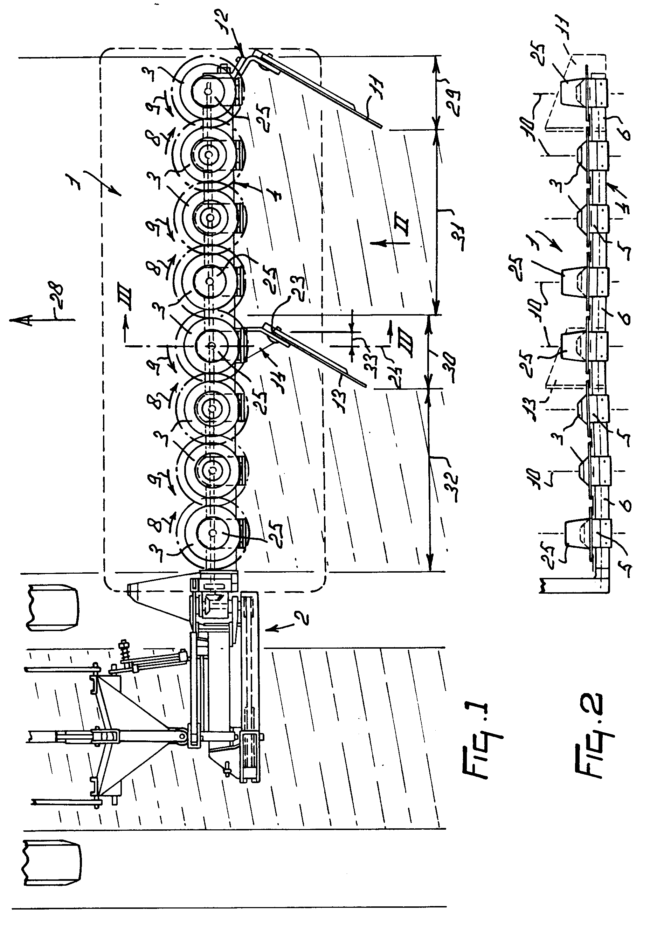

The implement for mowing standing crop, shown in Figures 1 to 4, comprises a mowing section 1 which constitutes a cutter bar and is connected to a carrier frame 2, by means of which the mowing machine is couplable to the lifting hitch of a tractor or a similar suchlike vehicle, the arrangement being such as is shown in Figure 1.

The mowing section 1 includes a plurality of mowing members 3, eight in this embodiment, which are rotatably attached to a carrier beam 4 in a position above the mowing members. In this embodiment, the carrier beam 4 is assembled from a plurality of carrier housings 5 and intermediate sections 6 arranged therebetween. The carrier housings 5 and the intermediate sections 6 are interconnected by a tensile member 7 which extends in a manner not further shown across the overall length of the carrier beam 4, the arrangement being such that the tensile member clamps the carrier housings 5 and the intermediate sections 6 against each other. In a manner not further shown, the mowing members 3 are connected to shafts which are rotatably supported in the carrier housings 5, the arrangement being such that the mowing members can be induced to rotate about upwardly extending rotary shafts 10. So as to provide that in operation the mowing members are caused to rotate, a drive shaft is accommodated in the carrier beam 4 and transmission members are accommodated in the carrier housings, the arrangement being such that the various mowing members can be brought to rotation in the desired direction about the rotary shafts 10. In the embodiment shown in Figure 1, the mowing members located in a side-by-side relationship are driven in operation in opposite rotational directions 8 and 9. The drive of the mowing members is chosen such that the leading sides of the outer mowing members move towards the centre of the mowing section. In this situation, the leading sides of the outer mowing members will move towards each other during rotation. If so desired, the rotational directions of the mowing members can be chosen differently. The transmission members inside the carrier beam 4 are driven in a manner not further shown via transmission members accommodated in the carrier frame 2 from the power take-off shaft of the tractor or a similar suchlike vehicle, to which the mowing machine is coupled by means of the carrier frame 2.

One end of the cutter bar is provided with a swath member constituted by a swath board 11. The swath member 11 is attached to a support 12 which itself is connected to the end of the carrier beam by means of the tensile member 7.

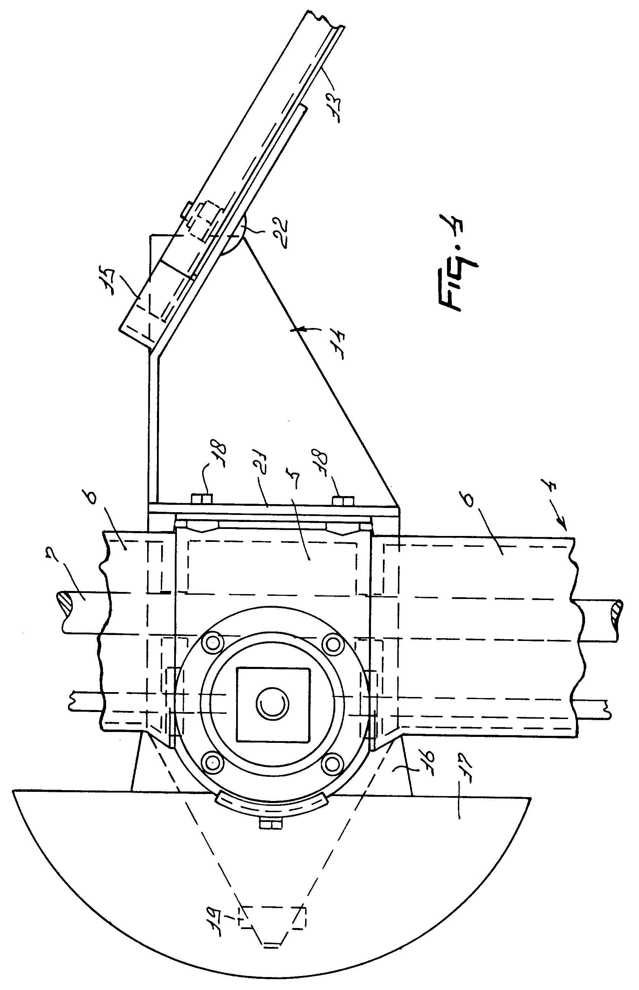

A swath divider 13 is attached remote from the two ends of the mowing section 1, or the carrier beam 4, respectively, to the carrier beam 4. The swath divider 13 is of the same design as the swath member 11 and is therefore also constituted by a swath board. The swath divider 13 and the swath member 11 extend parallel to each other, the arrangement being such as is shown in Figure 1. The swath board 11 has its leading end located near the outer end of the mowing section 1 and from its leading side extends obliquely rearwardly towards the centre behind the mowing section. In this embodiment, the swath divider 13 is arranged approximately halfway the length of the mowing section 1. The swath divider 13 is attached to a supporting member 14, which itself is connected to the carrier beam 4, and the supporting member 14 is connected to a carrier housing 5. Each of the carrier housings, which are made of cast material, is provided with a supporting block 16 having a protecting nose 17 at its leading end. The blocks 16 are bolted to the rear side of the housings 5 by means of bolts 18, as is shown in further detail in Figure 3. Under the supporting blocks 16 there are provided wearing plates 20, which have their leading sides located in an aperture 19 of the nose 17 of the block 16. The wearing plates have their rear sides bolted to the relevant housings by means of the bolts 18. In this embodiment, the supporting member 14 forms an integral whole with the wearing plate 20, the arrangement being such as is shown in further detail in Figures 3 and 4. In these, by means of its leading end, the wearing plate 20 is arranged in the aperture 19, while its rear end extends rearwardly to beyond the rear side of the housing 5 and consequently of the carrier beam 4. The supporting member 14 is provided with a connecting plate 21, by means of which the supporting member and the wearing plate 20 are bolted to the rear side of the housing 5 by the bolts 18. The swath divider 13 is in the form of a swath board, which is connected to the support member 14 by means of a connecting bolt 22. The connection of the swath board to the support member 14 by means of the bolt 22 is such that the swath board 13 can pivot to a greater or lesser extent about the axis of the connecting bolt 22, the arrangement being such that in operation the swath board can bear on the soil by means of its bottom side. Preferably, as in this embodiment, crop guide members 25 are provided on the two outer ones of the adjacently arranged mowing members. In the region of the swath divider 13, two neighbouring mowing members 3 are likewise provided with crop guide members 25. In this embodiment, the crop guide members are designed as truncated conical or hat-like members. One crop guide hat 25 is then arranged on the mowing member which is connected to the housing 5 having attached thereto the swath divider 13, which swath divider is located behind the said mowing member. In addition, a crop guide hat is arranged on the mowing member which is located next to the one that is connected to the housing, behind which the swath divider 13 is disposed. The mowing member in question is positioned at that side of the mowing member behind which the swath divider is located that faces away from the one to which the swath divider 13 moves the material sideways. The said mowing member is also positioned at that side of the mowing member behind which the swath divider is located that faces the swath member 11, or that faces the outer end of the mowing section 1, respectively. The outer end of the mowing section 1 is that end which is farthest from the tractor or a similar suchlike vehicle, to which the mowing implement is attached. The crop guide hats 25 are connected detachably to the relevant mowing members. In this embodiment, the crop guide hats 25 are connected detachably to the mowing members by means of bolts 26, the arrangement being such as is shown in further detail in Figure 3.

In normal operation of the implement, it is moved in the direction 28. During travel, the mowing members are caused to rotate, e.g. in the rotational directions 8 and 9 as shown in Figure 1, it being possible for adjacently arranged mowing members to rotate in opposite directions during operation. If so desired, the rotational directions of the mowing members may also be chosen differently. During travel in the direction of travel 28, the mowing members 3 will cut the standing crop. The mown crop will move over the mowing members to therebehind. The mown crop is deposited on the soil behind the mowing machine. The swath divider 13 and swath member 11, which relative to the direction of travel 28 are located behind the mowing members 3 and the carrier beam 4, will grip a portion of the crop moving across the mowing members and move it sideways. As a result thereof, the mown crop is deposited in two spaced-apart swaths behind the mowing machine. The swath member 11 is disposed on the end of the carrier beam 4 in such a manner that the crop mown during the operating run will be sufficiently free from the crop not yet mown. The working width 29 of the swath board 11 has been chosen such that in a subsequent mowing run the crop not yet mown can be cut easily, without the swath already mown obstructing the subsequent mowing run.

More in particular with a mowing implement having a large working width, a swath formed behind the mowing implement will be of such a width that there is a risk that a machine, by means of which a subsequent working run will be performed, will drive over the mown swath, or that the wheels of a tractor carrying such a machine will drive over the crop. When the cutter bar is arranged at the front side of a tractor, then it is possible that also the tractor wheels drive over the mown swath. It is therefore useful to provide the mower with a swath divider, which is arranged at such a distance from the ends of the mowing section 1 that no swaths are formed wider than those which can be passed by a normal tractor or a machine performing a subsequent operating run in such a manner that it is ensured that the wheels stay clear from the swath. Therefore, the width 29 is chosen such that a tractor wheel can move over this width without touching the deposited crop. In order to prevent the formation of an excessively wide swath, the swath divider 13 is disposed remote from the two ends of the mowing section 1. The swath divider 13 divides the mown swath into two parts in such a manner that a path having a width 30 is created therebehind. Preferably, this width 30 is of such a size that a tractor wheel or a wheel of an other vehicle can move thereacross without touching the mown crop. The spacing between the swath divider 13 and the swath board 11 is preferably chosen such that, between the swath divider 13 and the swath board 11, the swath formed has a width 31 which does not exceed the spacing between the wheel tracks of a normal tractor or an other agricultural machine for further processing of the swaths. The swath formed to the left of the swath divider 13, taken in the direction of operative travel 28, has a width 32 which is also less than the spacing between e.g. the wheel tracks of a tractor or the wheels of further processing machines. Depending on the working width of the mowing machine, the length of the cutter bar and the row of mowing members provided thereon, respectively, the position of the swath divider can be chosen to be at a greater or less great distance from the outer end of the mowing section. The swath divider will preferably be arranged, as is shown in Figure 1, behind a mowing member which, the mowing machine being operative, rotates in a rotational direction which is such that it moves the crop mown thereby into a lateral direction facing away from the leading end of the swath divider 13. In the embodiment shown, there will consequently be formed a swath across the width 31 which in essence is fed by the four mowing members located farthest to the right, taken in the direction of operative travel 28. The swath deposited on the width 32 will contain the crop mown by the four left-hand mowing members during travel in the direction 28.

When the rotational direction of the mowing members would be chosen differently or the diameters of the mowing members would be different and a swath of a width 31 is to be formed, it may alternatively be possible that the working direction of the swath divider 13 is not arranged parallel to the swath board 11 but opposite thereto, so that, in a direction from the front to the rear, the swath divider 13 extends obliquely sidewardly in the direction of the swath member 11. Preferably, the swath divider will therefore be located behind a mowing member having a rotational direction which is such that the leading side of this mowing member moves in the direction wherein the swath divider extends obliquely rearwardly and sidewardly.

For an adequate operation of the swath divider, the leading end 23 thereof is located in the vicinity of the plane 24 which contains the rotary axis of the mowing member located straight in the direction 28 in front of the swath divider 13. Preferably, the leading end 23 is at a slight distance 33 from this plane, more specifically at that side thereof that is opposite to the side of the plane 24 in which the major portion of the swath divider is present. This major portion of the swath divider preferably extends laterally from the plane 24 through a distance 34 which is greater than the distance 33, the arrangement being such that an adequate swath division and a sufficiently wide track 30 are produced.

If, for example, an odd number of mowing members is provided, it may happen that the swath divider 13 divides the mown crop into two individual swaths of unequal widths. The widths 31 and 32 of the swaths can therefore differ from each other to a greater or lesser extent.

Particularly in the case in which thick and/or high crop is mown and/or when the rate of travel of the mowing implement in the direction of travel 28 is relatively high, a crop guide member 25 is preferably provided on the mowing members located on the ends of the row of mowing members. These mowing members, which in operation preferably rotate in a direction such that their leading sides move away from the ends of the mowing section, will then advantageously guide the crop mown by the outer mowing members to the inside by means of the crop guide hat in such a manner that the width of the swaths will be formed within the overall mowing width. In addition, in the region of the presence of a swath member, e.g. the swath member 11, the crop guide hat will prevent too much crop from moving up against the swath member, which might cause clogging of crop in front thereof.

Preferably, in circumstances in which thick and/or high crop is mown more specifically at a relatively high speed, the mowing member 3 positioned in front of the swath former 13 is also provided with a crop guide member 25. In case of the preferably desired above-defined rotational direction of this mowing member positioned in front of the swath former, the crop guide member will prevent too large a quantity of mown crop from arriving in front of the swath former, which consequently might cause accumulation of crop in front thereof.

It has been found that, when extra high and/or heavy crop is to be mown, it is advantageous to provide with a crop guide member 25 also the mowing member located at that side aside of the mowing member behind which the swath former is provided that is remote from that side to which the swath former laterally displaces the crop. Thus, in the embodiment shown, two crop guide hats 25 are disposed on two mowing members that are not located at the ends of the row of mowing members, in this embodiment on the two centremost members of the row. These centremost crop guide members 25 will rotate in mutually opposite directions, since in this region near the swath divider also the mowing members are to rotate oppositely. This rotation will be such that the leading sides of the mowing members, and consequently of the crop guide members disposed thereon, will move away from each other. Thus, the crop guide members extending upwardly above the mowing members will grip the high crop and pull it apart near the leading side of the mowing section or the leading side of the mowing members, respectively. This will have an advantageous effect on the formation of two spaced-apart swaths by the swath divider and will prevent the crop from accumulating in front thereof. Depending on the height of the crop to be worked by the mowing member in difficult circumstances, it will be possible for the height of the crop guide members to be used, more specifically in the region of the swath divider 13, to be chosen such that an adequate crop separation is obtained so as to enable the formation in an advantageous manner of two spaced-apart swaths.

Advantageously, the crop guide members, more specifically those positioned near the swath former 13, will be mounted detachably on the mowing members, so that they can be removed when crop of a shorter length and a lesser thickness is mown and such crop guide members cause an excessive lateral displacement of the crop. For lighter crop and crop of a lesser height, it will then be possible to remove the crop guide members, more particularly in the region of the swath divider 13.

An advantageous construction and a simple connection of the swath divider is obtained by connecting same, as is shown in further detail in Figures 3 and 4, via the connection of the supporting or slide block 16 to the carrier beam 4. An adequate construction is obtained when the wearing plate disposed under the slide block is produced as an integral whole with the supporting member 14 for the swath divider 13. Preferably, the swath divider 13 will be capable of moving upwardly relative to the supporting member 14 to ensure that in operation the swath divider 13 can bear at least more or less with its entire own weight on the soil, so that a clear path 30 is formed between the swaths.

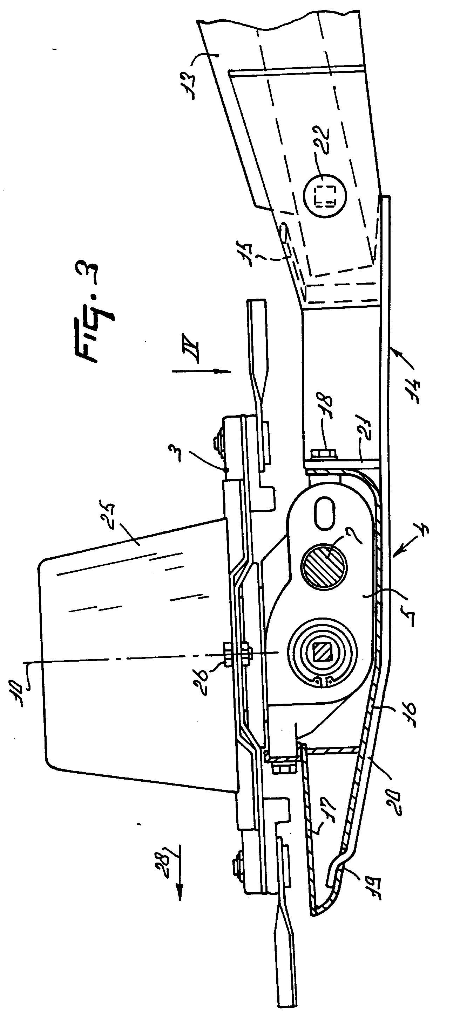

More in particular, since in a mowing machine having rotating mowing members the oppositely rotating mowing members already effect a certain separating action of the crop cut by these mowing members, the swath divider can successfully be used in combination with a mowing machine having rotating mowing members. Particularly since such a mowing machine can be driven comparatively fast, and consequently a relatively large quantity of crop is to be worked per unit of time, the swath divider in combination with the rotating mowing members can function adequately for forming separate swaths. Then, the combination of the swath divider with one or, as shown in Figures 1 and 2, two crop guide members provided on neighbouring rotary mowing members in the region of the crop divider can be used very advantageously for processing heavy and/or high crop and to deposit same into two separate swaths.

Particularly when there is used a construction in which the carrier beam 4 is assembled from carrier housings and intermediate sections, the swath divider can be used advantageously. For the swath divider can then be connected in an advantageous manner to a carrier housing and simultaneously be positioned in a proper manner behind a rotating mowing member. The supporting member of the swath divider can then be attached in an advantageous manner to the connection of the supporting block at the relevant carrier housing.

Although in the embodiment shown in Figures 1 and 2 the mowing section operates aside of a tractor (taken in the direction of operative travel 28) and is coupled to the lifting hitch at the rear side of a tractor, the shown construction of the mowing section 1 can also be used advantageously with a mower which is suitable for coupling to the front side of a tractor or a different type of vehicle. In this situation, the swath divider 13 can then be arranged such that, possibly in combination with a swath member 11, a swath is produced, on both sides of which the wheels of the tractor or a similar suchlike vehicle can pass. The swath will then lie between the wheel tracks. A second formed swath can then be deposited aside of the tractor, such as e.g. the swath 32. The tractor wheels can then move along paths which are free from crop, e.g. the paths 29 and 30. Thus the mown crop will not be pressed firmly against the soil by the wheels, which might negatively affect drying of the swath.

Although in the embodiment of Figures 1 to 4 the swath divider 13 extends obliquely rearwardly into one direction, a swath divider may alternatively consist of two portions extending obliquely rearwardly in opposite directions. For this purpose, a swath divider can be provided with two obliquely rearwardly and oppositely extending swath members, e.g. swath boards. In a plan view, these swath members may then be arranged in V-shape, in which situation they then converge in the forward direction, i.e. in the direction 28. When such a swath divider is used, it will be easier, if so desired, to form a path of a larger width behind the swath divider. In addition, the swath members can be arranged at a less oblique angle relative to the normal direction of operative travel 28, so that in some cases an improved conduction along the swath members can be obtained.

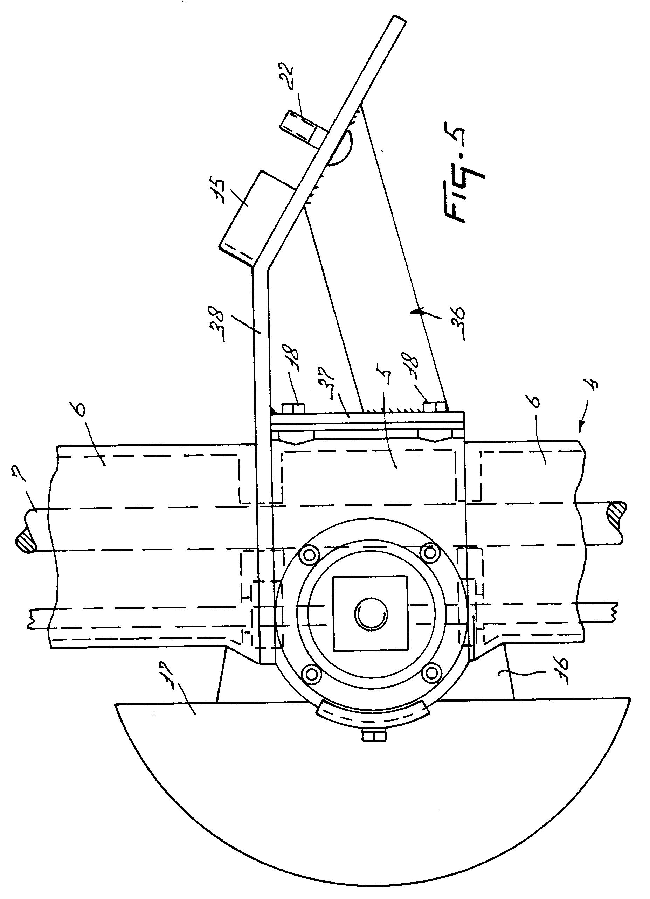

Figure 5 illustrates a different construction of a supporting member, by means of which the swath divider can be connected to the carrier beam 4. In the embodiment of Figure 5 there is shown a supporting member 36 comprising a connecting plate 37, by means of which the supporting member can be bolted to the rear side of the frame beam by the bolts 18. The supporting member furthermore has a supporting lug 38 of such a shape that it can be inserted between a carrier housing 5 and an intermediate section 6. The supporting lug 38 can then be clamped between the carrier housing 5 and the intermediate section 6 on tightening of the tensile member 7, by means of which the carrier housings and intermediate sections can be clamped against each other. To ensure that the relative position of the mowing members remains the same, in the embodiment of Figure 5 an intermediate section 6 will be shorter than in the embodiment of Figures 1 to 4. Preferably, the intermediate section 6 is then so much shorter that its length together with the thickness of the supporting lug 38 is equal again to the length of an intermediate section 6 in the embodiment of Figures 1 to 4. The supporting lug 38 may be provided at its rear side with a folded portion, in which the bolt 22 can be accomodated for connecting the swath board of the swath divider to the supporting member 36. Like in the preceding embodiment, the supporting member 36 may have a stop of such a design that the movement of the swath board about the centre line of the bolt 22 is limited in such manner that the swath board can move slightly upwardly thereabout, so as to be able to bear advantageously on the soil during operation but unable to deflect too much in the upward direction. The construction of Figure 5 can also be used when the carrier beam 4 is only assembled from carrier housings which are clamped against each other. In such a construction, it may be possible for the intermediate sections to form an integral whole with one of the carrier housings.

Figure 6 shows a still further embodiment of a supporting member 39, by means of which a swath divider can be connected to the carrier beam 4. In this embodiment, the supporting member 39 includes a connecting plate 40, by means of which the supporting member can be bolted to a carrier housing 5 by the bolts 18. In this embodiment, the supporting member 39 is provided with a projection 41 which fits around the rear side of an intermediate section 6 located aside of the carrier housing 5 in such a manner that the supporting member 39 adequately bears against the carrier beam. Like the supporting member 36, the supporting member 39 shown in Figure 6 is provided in a manner not further shown with a bolt 22 and a stop 15 for connecting the swath board of the swath divider to the support. If so desired, the supporting members 36 and 39 can alternatively be combined with a wearing plate 20, as is shown in Figures 3 and 4.

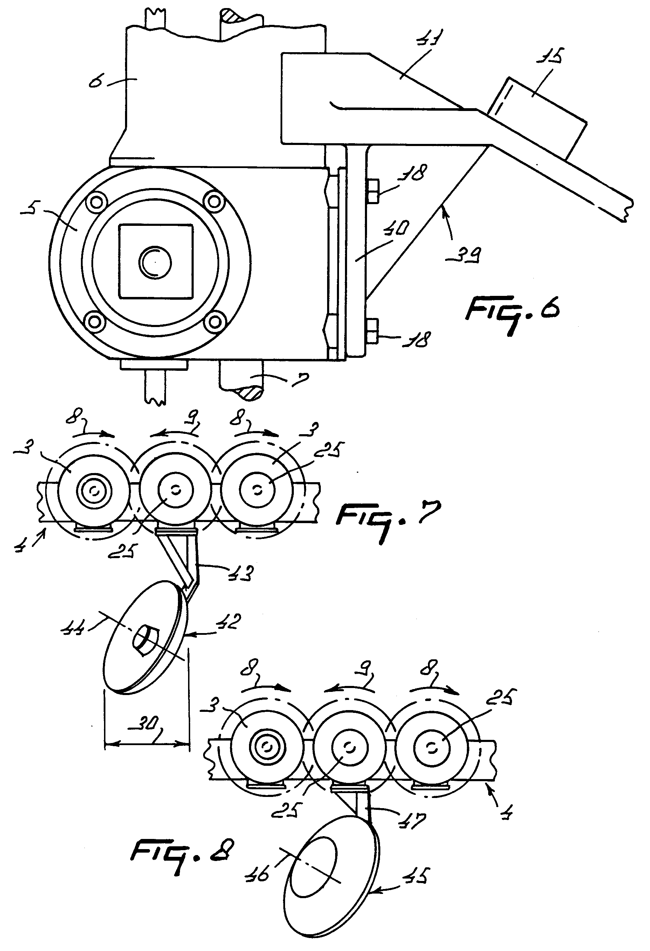

Figure 7 illustrates a swath divider 42 of a different construction than in the preceding embodiments. In the embodiment of Figure 7, the swath divider 42 is attached capably of rotation about a rotary shaft 44 to a supporting member 43. In a manner not further shown, the supporting member 43 is connected to the rear side of a carrier housing 5 of the carrier beam 4. With respect to the horizontal plane, the rotary shaft 44 extends obliquely upwardly when the mowing machine is in a horizontal position. As a result thereof, the somewhat concave disc-like swath divider 42 can advantageously pick up the crop mown by the mowing members lying in front of the swath divider and discharge same laterally in the direction of the swath to be formed. Thus there is created behind the swath divider 42 a free path 30 for the tractor wheels or the wheels of a further vehicle used in performing a subsequent processing operation of the mown crop.

Figure 8 shows a still further embodiment of a swath divider 45. The swath divider 45 is constituted by a truncated conical member which is attached capably of rotation about a rotary shaft 46 to a supporting member 47. The rotary shaft 46, like the rotary shaft 44, extends somewhat obliquely with respect to the surface area to be worked in such a manner that it encloses with this surface area an oblique angle which extends divergingly in a direction from the leading side of the swath divider which in operation will grip the crop. Like in the preceding embodiment, the supporting member 47 is here also connected to a carrier housing 5 of a carrier beam 4 assembled from intermediate sections and carrier housings. It will be obvious that the supporting members 47, and 43 of the preceding embodiment, may be of a different construction than schematically shown in these drawings.

A swath divider having one or a plurality of rotating bodies, as shown in Figures 7 and 8, can be useful for an adequate lateral displacement of the mown crop, e.g. when used with crop types which must not move too abruptly along a stationary swath board of a swath divider, so as to prevent damaging thereof. The size of the diameters of rotating swath dividers can be adapted to the circumstances in which they are to be used. The diameters may be slightly larger if heavy and long crop is to be worked. It should be noted that also for rotating swath dividers the relevant mowing members located near these swath dividers, as shown in Figures 1 and 2, can be provided with crop guide members to obtain an adequate separation of the mown crop for the formation of spaced-apart swaths.

## Claims

1. An implement for mowing standing crop, comprising a cutter bar having rotatable, carrier beam-supported mowing members (3), said implement being provided with a swath divider (13) disposed remote from the two cutter bar ends, the arrangement being such that in operation the crop cut by the mowing members is divided across the cutter bar width into two spaced-apart swaths, characterized in that the cutter bar is provided with a number of housings (5) to each of which at least one mowing member (3) is rotatably connected, a supporting member (14) being attached to individual ones of said housings (5), to which supporting member (14) the swath divider (13) can be connected, whereby the position of the swath divider (13) can be chosen to be at different distances from the outer end of the carrier beam.

2. An implement as claimed in claim 1, characterized in that the swath divider (13) is positioned at least partly relative to the normal direction of operative travel behind a mowing member (3) provided with a crop guide member (25).

3. An implement as claimed in claim 2, characterized in that there is arranged a crop guide member (25) on the mowing member (3) which is located aside the one having behind it the swath divider (13), and which is located at the latter mowing member side facing away from the one to which, during normal operation, the swath divider (13) moves the crop sideways.

4. An implement as claimed in claim 2 or 3, characterized in that the crop guide member (25) is in the shape of a hat or a truncated cone.

5. An implement as claimed in any one of the claims 2 to 4, characterized in that the crop guide member (25) is mounted detachably on the upper side of a mowing member.

6. An implement as claimed in any one of the preceding claims, characterized in that the swath divider (13) extends perpendicularly to the normal direction of operative travel of the mowing implement through a distance located on either side of a plane extending in the direction of operative travel and comprising the rotational axis of the mowing member (3), behind which the swath divider (15) is arranged.

7. An implement as claimed in any one of the preceding claims, characterized in that the swath divider (13) is fastened at least partly to the carrier beam (4) of the cutter bar by means of fastening means (18), by which a supporting block (16) of the cutter bar is connected to the carrier beam (4).

8. An implement as claimed in claim 7, characterized in that the supporting member (14) includes a wearing shoe (20) which is fitted under the supporting block (16).

9. An implement as claimed in any one of the preceding claims, characterized in that the carrier beam (4) is at least predominantly assembled from interconnected carrier housings (5) and intermediate sections (6), the latter sections being arranged between the carrier housings (5).

10. An implement as claimed in claim 9, characterized in that a supporting member (38) is connected at least partly between a carrier housing (5) and an intermediate section (6).

11. An implement as claimed in claim 9 or 10, characterized in that the carrier housings (5) and/or intermediate sections (6) are interconnected with the aid of clamping means (7).

12. An implement as claimed in any one of the preceding claims, characterized in that the swath divider (13) is constituted by a swath board.

13. An implement as claimed in any one of the preceding claims, characterized in that the swath divider (13) includes a member (42) which is rotatable about a rotary shaft (44).

14. An implement as claimed in any one of the preceding claims, characterized in that the swath divider (13) extends at least substantially parallel to a swath member (11) located near the end of the cutter bar.

15. An implement as claimed in claim 14, characterized in that the swath member (11) is positioned opposite that end of the cutter bar that is provided with connection means, via which the implement is couplable to the lifting hitch of a tractor or a similar vehicle.

16. An implement as claimed in claim 14 or 15 in combination with a wheeled carrying frame therefor, characterized in that the swath divider (13) is in a position remote from the swath member (11) at such a distance that the swath formed between the swath divider (13) and the swath member (11) is located between the wheels of the frame carrying the cutter bar, e.g. the wheels of a tractor to which the implement is coupled.

## Patentansprüche

1. Vorrichtung zum Mähen von stehendem Erntegut, mit einem Mähbalken mit drehbaren, in einem Tragbalken abgestützten Mähgliedern (3), wobei die Vorrichtung einen Schwadteiler (13) aufweist, der von den beiden Enden des Mähbalkens entfernt angeordnet ist, derart, daß im Betrieb das von den Mähgliedern abgeschnittene Gut über die Breite des Mähbalkens in zwei auf Abstand liegende Schwaden aufgeteilt wird,
dadurch gekennzeichnet, daß der Mähbalken mehrere Gehäuse (5) aufweist, wobei in jedem dieser Gehäuse mindestens ein Mähglied (3) drehbar angeordnet ist, wobei an einzelnen Gehäusen (5) ein Stützglied (14) angeordnet ist, an welchem der Schwadteiler (13) anbringbar ist, wobei die Position des Schwadteilers (13) so gewählt werden kann, daß der Abstand zum äußeren Ende des Tragbalkens unterschiedlich ist.

2. Vorrichtung nach Anspruch 1,
dadurch gekennzeichnet, daß der Schwadteiler (13) in bezug auf die Arbeitsrichtung zumindest teilweise hinter einem mit einem Gutführungsglied (25) versehenen Mähglied (3) angeordnet ist.

3. Vorrichtung nach Anspruch 2,
dadurch gekennzeichnet, daß ein Gutführungsglied (25) auf dem Mähglied (3) angeordnet ist, das neben dem Mähglied liegt, hinter dem der Schwadteiler (13) angeordnet ist, und welches auf dem zuletzt genannten Mähglied angeordnet ist, das abgewandt dem Mähglied liegt, zu dem der Schwadteiler (13) das Gut im Betrieb seitwärts bewegt.

4. Vorrichtung nach Anspruch 2 oder 3,
dadurch gekennzeichnet, daß das Gutführungsglied (25) die Form einer Haube oder eines Kegelstumpfes hat.

5. Vorrichtung nach einem der Ansprüche 2 bis 4,
dadurch gekennzeichnet, daß das Gutführungsglied (25) an der Oberseite eines Mähgliedes lösbar angebracht ist.

6. Vorrichtung nach einem der vorhergehenden Ansprüche,
dadurch gekennzeichnet, daß sich der Schwadteiler (13) rechtwinklig zur Arbeitsrichtung der Mähvorrichtung über eine Distanz erstreckt, die beiderseits einer Ebene liegt, die sich in Arbeitsrichtung erstreckt und die Drehachse des Mähgliedes (3) enthält, hinter dem der Schwadteiler (13) angeordnet ist.

7. Vorrichtung nach einem der vorhergehenden Ansprüche,
dadurch gekennzeichnet, daß der Schwadteiler (13) zumindest teilweise an dem Tragbalken (4) des Mähbalkens durch ein Befestigungselement (18) befestigt ist, mittels dessen ein Stützelement (16) des Mähbalkens an dem Tragbalken (4) angebracht ist.

8. Vorrichtung nach Anspruch 7,
dadurch gekennzeichnet, daß das Stützglied (14) einen Schleifschuh (20) aufweist, der unter dem Stützelement (16) angeordnet ist.

9. Vorrichtung nach einem der vorhergehenden Ansprüche,
dadurch gekennzeichnet, daß der Tragbalken (4) zumindest überwiegend aus miteinander verbundenen Trägergehäusen (5) und Zwischenstücken (6) zusammengesetzt ist, wobei die Zwischenstücke zwischen den Trägergehäusen (5) angeordnet sind.

10. Vorrichtung nach Anspruch 9,
dadurch gekennzeichnet, daß ein Stützglied (38) zumindest teilweise zwischen einem Trägergehäuse (5) und einem Zwischenstück (6) angeordnet ist.

11. Vorrichtung nach Anspruch 9 oder 10,
dadurch gekennzeichnet, daß die Trägergehäuse (5) und/oder die Zwischenstücke (6) mittels einer Spannvorrichtung (7) miteinander verbunden sind.

12. Vorrichtung nach einem der vorhergehenden Ansprüche,
dadurch gekennzeichnet, daß der Schwadteiler (13) durch ein Schwadblech gebildet ist.

13. Vorrichtung nach einem der vorhergehenden Ansprüche,
dadurch gekennzeichnet, daß der Schwadteiler (13) ein Glied (42) aufweist, das um eine Drehachse (44) drehbar ist.

14. Vorrichtung nach einem der vorhergehenden Ansprüche,
dadurch gekennzeichnet, daß sich der Schwadteiler (13) zumindest im wesentlichen parallel zu einem Schwadelement (11) erstreckt, das nahe dem Ende des Mähbalkens angeordnet ist.

15. Vorrichtung nach Anspruch 14,
dadurch gekennzeichnet, daß das Schwadelement (11) am entgegengesetzten Ende zu dem Ende des Mähbalkens angeordnet ist, das mit Anschlüssen versehen ist, über die die Vorrichtung an die Hebevorrichtung eines Schleppers oder ähnlichen Fahrzeuges anschließbar ist.

16. Vorrichtung nach Anspruch 14 oder 15 in Kombination mit einem mit Rädern versehenen Tragrahmen hierfür,
dadurch gekennzeichnet, daß der Schwadteiler (13) an einer Stelle angeordnet ist, die zu dem Schwadelement (11) einen solchen Abstand hat, daß der zwischen dem Schwadteiler (13) und dem Schwadelement (11) gebildete Schwad zwischen den Rädern des den Mähbalken tragenden Rahmens liegt, z. B. zwischen den Rädern eines Schleppers, an den die Vorrichtung angeschlossen ist.

## Revendications

1. Un dispositif de fauchage de récoltes sur pied, comprenant une barre de coupe ayant des organes faucheurs (3) rotatifs supportés par une poutre porteuse, ledit dispositif étant muni d'un diviseur d'andain (13) disposé à distance des deux extrémités de la barre de coupe, l'agencement étant tel que, pendant le travail, la récolte coupée par les organes faucheurs est divisée, transversalement à la largeur de la barre de coupe, en deux andains espacés l'un de l'autre,
caractérisé en ce que la barre de coupe est munie d'un certain nombre de boîtiers (5) à chacun desquels est relié de manière rotative au moins un organe faucheur (3), un organe de support (14) étant attaché individuellement à chacun desdits boîtiers (5), le diviseur d'andain (13) pouvant être relié audit organe de support (14), la position du diviseur d'andain (13) pouvant de ce fait être choisie pour être à des distances différentes de l'extrémité extérieure de la poutre porteuse.

2. Un dispositif selon la revendication 1, caractérisé en ce que le diviseur d'andain (13) est positionné au moins partiellement, par rapport au sens normal de marche du travail, derrière un organe faucheur (3) muni d'un organe guide-récolte (25).

3. Un dispositif selon la revendication 2, caractérisé en ce qu'un organe guide-récolte (25) est disposé sur l'organe faucheur (3) qui est situé à côté de celui ayant derrière lui le diviseur d'andain (13), et qui est situé sur le côté du dernier organe faucheur opposé à celui vers lequel, pendant le travail normal, le diviseur d'andain (13) déplace la récolte latéralement.

4. Un dispositif selon la revendication 2 ou 3, caractérisé en ce que l'organe guide-récolte (25) a la forme d'un chapeau ou d'un tronc de cône.

5. Un dispositif selon l'une quelconque des revendications 2 à 4, caractérisé en ce que l'organe guide-récolte (25) est monté de manière démontable sur le côté supérieur d'un organe faucheur.

6. Un dispositif selon l'une quelconque des revendications précédentes, caractérisé en ce que le diviseur d'andain (13) s'étend perpendiculairement au sens normal de travail du dispositif de fauchage sur une distance située de part et d'autre d'un plan s'étendant dans le sens de travail et contenant l'axe de rotation de l'organe faucheur (3) derrière lequel le diviseur d'andain (13) est disposé.

7. Un dispositif selon l'une quelconque des revendications précédentes, caractérisé en ce que le diviseur d'andain (13) est attaché au moins partiellement à la poutre porteuse (4) de la barre de coupe par des moyens de fixation (18) par lesquels un bloc de support (16) de la barre de coupe est relié à la poutre porteuse (4).

8. Un dispositif selon la revendication 7, caractérisé en ce que l'organe de support (14) comporte un sabot d'usure (20) qui est monté sous le bloc de support (16).

9. Un dispositif selon l'une quelconque des revendications précédentes, caractérisé en ce que la poutre porteuse (4) est formée, au moins principalement, d'un assemblage interconnecté de boîtiers porteurs (5) et de sections intermédiaires (6), ces dernières sections étant disposées entre les boîtiers porteurs (5).

10. Un dispositif selon la revendication 9, caractérisé en ce qu'un organe de support (38) est relié, au moins partiellement, entre un boîtier porteur (5) et un section intermédiaire (6).

11. Un dispositif selon la revendication 9 ou 10, caractérisé en ce que les boîtiers porteurs (5) et/ou les sections intermédiaires (6) sont interconnectés à l'aide de moyens de serrage (7).

12. Un dispositif selon l'une quelconque des revendications précédentes, caractérisé en ce que le diviseur d'andain (13) est constitué par une planche à andain.

13. Un dispositif selon l'une quelconque des revendications précédentes, caractérisé en ce que le diviseur d'andain (13) comporte un organe (42) qui est rotatif autour d'un arbre de rotation (44).

14. Un dispositif selon l'une quelconque des revendications précédentes, caractérisé en ce que le diviseur d'andain (13) s'étend au moins substantiellement parallèlement à une planche à andain (11) située près de l'extrémité de la barre de coupe.

15. Un dispositif selon la revendication 14, caractérisé en ce que la planche à andain (11) est positionnée à l'opposé de celle des extrémités de la barre de coupe qui est munie de moyens de liaison par l'intermédiaire desquels le dispositif peut être couplé au dispositif d'attelage-levage d'un tracteur ou d'un véhicule similaire.

16. Un dispositif selon la revendication 14 ou 15, en combinaison avec un châssis porteur muni de roues, pour ledit dispositif, caractérisé en ce que le diviseur d'andain (13) est en une position éloignée de la planche à andain (11), à une distance telle que l'andain formé entre le diviseur d'andain (13) et la planche à andain (11) est situé entre les roues du châssis portant la barre de coupe, par exemple les roues d'un tracteur auquel le dispostif est couplé.
